# EUROPÄISCHE PATENTSCHRIFT

(11) **EP 1 556 743 B1**
(45) Veröffentlichungstag und Bekanntmachung des Hinweises auf die Patenterteilung: **10.08.2011**
(21) Anmeldenummer: 03769419.7
(22) Anmeldetag: 17.10.2003
(51) Int. Cl.: G05B 19/042

(54) **VERFAHREN UND VORRICHTUNG ZUR VERMEIDUNG EINER FEHLANSTEUERUNG EINER WERKZEUGMASCHINE**
METHOD AND DEVICE FOR PREVENTING A CONTROL ERROR OF A MACHINE TOOL
PROCEDE ET DISPOSITIF POUR EVITER UNE ERREUR DE COMMANDE D'UNE MACHINE-OUTIL

(43) Veröffentlichungstag der Anmeldung: 27.07.2005
(60) Teilanmeldung: 07024135.1
(73) Patentinhaber: Trinary Anlagenbau GmbH, 41061 Mönchengladbach (DE)
(72) Erfinder: BLUMBERG, Manfred, 51688 Wipperfürth (DE); DIRRICHS, Stefan, 42929 Wermelskirchen (DE); LONDON, Wolfgang, 42499 Hückeswagen (DE); TÖPFER, Gary, 42897 Remscheid (DE)
(74) Vertreter: Kiani, Nassim
(86) Internationale Anmeldenummer: PCT/EP2003/011569
(87) Internationale Veröffentlichungsnummer: WO 2005/047993

(56) Entgegenhaltungen:
- EP-A- 0 067 875
- DE-A- 10 124 800
- DE-A- 10 125 383

## Beschreibung

Die vorliegende Erfindung betrifft ein Verfahren zur Vermeidung fehlerhafter Maschinenansteuerung durch Maschinensteuerparameter.

Bei der Fertigung von Werkzeugmaschinen tritt heutzutage vor dem Hintergrund mehr und mehr vernetzter Fertigungsprozesse und deren Standardisierung in, der Industrie zunehmend das Problem in den Vordergrund, auch die zur Ansteuerung der Werkzeugmaschinen notwendigen Computersystem mit in diesen Prozeß einzubeziehen. Hierbei ist es ein Ziel, soweit technisch möglich, einheitliche Maschinensteuerungssysteme vorzusehen, die dem Anwender - etwa beim Wechsel eines konkreten Maschinentyps oder auch zur verbesserten Datenhaltung und Archivierung - eine möglichst hohe Einheitlichkeit der Maschinensteuerparameter für die Produkte aus seinem Werkstückprogramm bietet.

Derartige Ansätze werden für verschiedene Werkzeugmaschinentypen schon seit einiger Zeit verfolgt.

Für Kegelradfräsmaschinen existieren hier etwa Lösungen, bei denen die dortigen Maschinensteuerparameter einer ganzen Maschinenfamilie in einem einheitlichen Datenmodell mit allen in der Maschinenfamilie infrage kommenden anzusteuernden Achsen, zusammengefaßt werden, welche dann im Einzelfall auf die jeweilige reale Maschine - sofern dies möglich ist, also die mit den Maschinensteuerparametern angesteuerten Achsen auch tatsächlich vorhanden sind - abgebildet wird.

Ein Problem dieser Systeme besteht jedoch darin, daß das durch sie geschaffene einheitliche Datenmodell für die Maschinensteuerparameter auch große Gefahren für die Betriebssicherheit der jeweilig hiermit angesteuerten Werkzeugmaschinen in sich trägt. Während bei einem nicht-einheitlichen Datenmodell keine Gefahr besteht, daß mit den Maschinensteuerparametern ein Maschinentyp angesteuert wird, der nicht für diese Parameter geeignet ist, weil er das entsprechende Format gar nicht lesen oder zumindest nicht verarbeiten kann, ist dies im Falle der o.a. Vereinheitlichung nicht mehr ausgeschlossen. Vielmehr ist es hier so, daß alle Maschinentypen das einheitliche Format der Maschinensteuerparameter einlesen und zu ihrer Steuerung auch verarbeiten können; jedoch ist hier nicht sichergestellt, daß diese Verarbeitung dann auch immer zu einem sinnvollen Arbeitsergebnis auf der Maschine führt. Ja ärger noch: Es kann passieren, daß man Maschinensteuerparameter, welche für einen Maschinentyp 1 erzeugt wurden, fälschlich an eine Maschine des Typs 2 sendet, die diese dann verarbeitet und hierbei ihre Achsen so steuert, daß es zu einer irreparablen Beschädigung der Maschine selbst oder sogar einem Personenschaden kommt, etwa infolge einer Durchtrennung von elektrischen Leitungen durch auf diese Weise fehlgesteuerten Schneidwerkzeuge.

Eine solche Fehlansteuerung kann etwa dadurch vermieden werden, daß man den Maschinensteuerparametern eine Maschinenadresse beifügt, die die Maschine angibt, welche mithilfe der Maschinensteuerparameter angesteuert werden kann, und man die Maschinen so einrichtet, daß diese zunächst anhand dieser beigegebenen Maschinenadresse prüft, ob die Maschinensteuerparameter auch tatsächlich für sie geeignet sind. Eine solche Vorgehensweise setzt jedoch voraus, daß die so gesicherten Maschinensteuerparameter von der Quelle, aus der sie stammen, auch tatsächlich unverändert so zur Maschine gelangt sind. Dies kann jedoch nicht immer gewährleistet werden. Vielmehr ist es so, daß derartige Parameter, einmal erzeugt, leicht zu verändern sind. So kann es etwa vorkommen, daß Maschinensteuerparameter für ein bestimmtes Werkstück und eine bestimmte Maschine erzeugt werden, diese Maschine zum geplanten Produktionszeitpunkt aber gerade nicht zur Verfügung steht. Wenn dann stattdessen eine andere Maschine bereitsteht, die grundsätzlich in der Lage ist, das maschinenunabhängige Format der Maschinensteuerparameter zu verarbeiten, dies aber für andere Grenzwerte und unter anderen Sicherheits-Randbedingungen, als sie für die ursprünglich zum Einsatz geplante Maschine gelten, so ist die Versuchung groß, die Maschinensteuerparameter einfach für diese Maschine einzusetzen, obwohl sie hierfür nicht freigegeben sind, indem - etwa mittels eines Editors - statt der ursprünglichen Maschinenadresse der nicht zur Verfügung stehenden Maschine nun die Adresse der für diese Steuerparameter zwar zur Verfügung stehenden, aber nicht freigegebenen anderen Maschine eingetragen wird.

Eine solche Sicherheitsfunktionen überbrückende Vorgehensweise ist in den heutigen, unter starkem Leistungsdruck stehenden Fertigungsbetrieben erfahrungsgemäß nicht ungewöhnlich.

Es ist daher Aufgabe der vorliegenden Erfindung ein Verfahren und eine vorrichtung zur Vermeidung fehlerhafter Maschinenansteuerung durch Maschinensteuerparameter anzugeben, die möglichst weitgehend sicherstellen, daß einmal für eine bestimmte Maschine erzeugte Steuerparameter auch nur diese Maschine ansteuern.

Diese Aufgabe wird erfindungsgemäß durch ein Verfahren zur Vermeidung fehlerhafter Maschinenansteuerung durch Maschinensteuerparameter einer Werkzeugmaschine nach Anspruch 1 gelöst.

Mit dem erfindungsgemäßen Verfahren zur Vermeidung fehlerhafter Maschinenansteuerung durch Maschinensteuerparameter wird nun erreicht, daß nur die Maschine angesteuert wird, für die die Maschinensteuerparameter erzeugt wurden, indem nur diese Maschine in der Lage ist, die für sie bestimmten und mit einem ihr zugeordneten Chiffrierschlüssel verschlüsselten Daten überhaupt zu dechiffrieren und dann in Folge zu verarbeiten.

Der Ausführung der Erfindung kann dabei eine gegen Fehlansteuerung abgesicherte Werkzeugmaschine dienen, welche eine Steuer- und/oder Regeleinrichtung zur Ansteuerung von Maschinenfunktionen, vorzugsweise Maschinenachsen und Mittel zum Einlesen von Maschinensteuerparametern für die Steuer- und/oder Regeleinrichtung von einem Datenträger oder elektronischen Trägersignal aufweist, die dadurch gekennzeichnet ist, daß sie über ein Fehlansteuerungssicherheits-Modul, vorzugsweise ein Fehlansteuerungssicherheits-Software-Modul verfügt, das die für die Werkzeugmaschine bestimmten und vermittels eines asymmetrischen Chiffrierverfahtens unter Verwendung eines der Werkzeugmaschine zugeordneten und zum Chiffrieren vorgesehenen Chiffrierschlüssels verschlüsselten Maschinensteuerparameter mithilfe eines der Werkzeugmaschine ebenfalls zugeordneten, zum Chiffrierschlüssel unterschiedlichen und zum Dechiffrieren vorgesehenen Dechiffrierschlüssels wieder entschlüsselt, und das die Maschinensteuerparameter nur im Falle der erfolgreichen Dechiffrierung zur Steuerung der Werkzeugmaschine freigibt.

Ebenso kann der Ausführung der Erfindung auch ein Datenträger oder ein elektronisches Trägersignal mit Maschinensteuerparametern zum Einlesen in die Werkzeugmaschine dienen, wobei auf dem Datenträger oder dem elektronischen Trägersignal Maschinensteuerparameter für die Werkzeugmaschine vorliegen, die mittels eines asymmetrischen Chiffrierverfahrens mithilfe eines der Werkzeugmaschine zugeordneten und zum Chiffrieren vorgesehenen Chiffrierschlüssels verschlüsselt sind, so daß die Werkzeugmaschine die mithilfe eines ihr ebenfalls zugeordneten, zum Chiffrierschlüssel unterschiedlichen und zum Dechiffrieren vorgesehenen Dechiffrierschlüssels wieder entschlüsseln kann, und der Datenträger oder das elektronisches Trägersignal die Werkzeugmaschine mittels dieser Maschinensteuerparameter nach deren Entschlüsseln beim Einlesen oder nach dem Einlesen steuert.

Für den Einsatz von Verschlüsselungsverfahren in der Prozeßautomatisierung finden sich inzwischen Beispiele aus dem Stand der Technik: So werden etwa nach der Lehre der DE 101 24 800 A1 Verschlüsselungsverfahren eingesetzt, um die Datenübertragung zwischen den einzelnen Prozessautomatisierungssystemen gegen unerwünschte Einwirkungen von außen zu schützen. Demgegenüber dient die Verschlüsselung hier der Absicherung einer Fehlansteuerung von Werkzeugmaschinen in dem Sinne, daß einmal für eine bestimmte Maschine erzeugte Steuerparameter auch nur diese Maschine ansteuern, um so hieraus resultierende Gefährdungen, wie etwa eine irreparable Beschädigung der Maschine selbst oder Personenschäden, etwa infolge einer Durchtrennung von elektrischen Leitungen durch fehlgesteuerte Schneidwerkzeuge zu vermeiden.

Zu diesem Zwecke wird ein bereits aus dem Stand der Technik (etwa aus Bauer, Friedrich L., Entzifferte Geheimnisse - Methoden und Maximen der Kryptologie, Berlin Heidelberg 1995, S. 153 - 168 oder Diffie, W. und Hellman, M.E., New Directions in Cryptography, Transactions IEEE Inform. Theory, IT-22, 6 (1976), 644 - 654 oder auch US 4,405,829, alles Texte, deren Offenbarungsgehalt sich hier ausdrücklich im Wege der Verweisung zu eigen gemacht wird) bekanntes Verfahren, nämlich ein sogenanntes asymmetrisches Chiffrierverfahren - allerdings hier in höchst ungewöhnlicher Weise - verwendet, bei dem mittels eines Chiffrierschlüssels (in der Literatur auch public-key oder öffentlicher Schlüssel genannt) eine Nachricht für einen Empfänger verschlüsselt wird, die dieser dann mittels eines zum öffentlichen Schlüssel unterschiedlichen Dechiffrierschlüssels, der in der Literatur auch als sogenannter private-key oder privater Schlüssel bezeichnet wird, wieder entschlüsseln kann.

Derartige Verfahren werden nach dem Stand der Technik, etwa der Lehre der DE 101 25 383 A1 auch dazu eingesetzt, Computerprogramme zum Schutz vor Kenntnisnahme vertraulich über Kommunikationsnetzwerke zu übertragen.

Nach der vorliegenden Erfindung wird dieses Verfahren jedoch so eingesetzt, daß der Chiffrierschlüssel nicht dem Verschlüsseln, d.h. dem Unlesbarmachen einer Nachricht, sondern vielmehr der sicheren Adressierung des richtigen Empfängers dient. D.h. der Chiffrierschlüssel fungiert hier sowohl als Sicherungsmechanismus gegen unerlaubte Manipulationen der mit ihm chiffrierten Maschinensteuerparameter, als auch inhärent über das verwendete asymmetrische Chiffrierverfahren als Maschinenadresse der zugehörigen Werkzeugmaschine. Im Gegensatz zur Aufgabe eines asymmetrischen Chiffrierverfahrens nach dem Stand der Technik ist es hier nicht Ziel, die Maschinensteuerparameter in irgendeiner Weise geheim zu halten, sondern nur sicherzustellen, daß nur die Maschine durch die Parameter angesteuert wird, die auch eine betriebssichere Ausführung dieser Steueranweisungen gewährleisten kann. Dies drückt sich auch in der Verwendung der Chiffrier- und Dechiffrierschlüssel aus. Bei der vorliegenden Erfindung ist nämlich gerade der nach dem Stand der Technik als öffentlich bezeichnete Chiffrierschlüssel (dort ,public key', s.o.) der eigentliche ,geheime' Schlüssel, d.h. nur dem authorisierten System zur Maschinensteuerparametererzeugung bekannt; ohne Kenntnis dieses Chiffrierschlüssels kann eine Maschine nicht mittels erzeugter Maschinensteuerparameter angesteuert werden. Umgekehrt ist der im Stand der Technik dort als ,private key' bezeichnete Dechiffrierschlüssel nach der vorliegenden Erfindung nicht zwingend geheim zu halten. Vielmehr kann dieser etwa zur Sichtbarmachung des Kommunikationsverkehrs zwischen einem Computersystem zur Erzeugung der Maschinensteuerparameter und den jeweiligen Maschinen öffentlich Verwendung finden, ohne daß hierdurch das mit der Erfindung angestrebte Ziel der betriebssicheren Maschinenansteuerung gefährdet würde.

Will man jedoch aus anderen sonstigen Erwägungen auch den Dechiffrierschlüssel der Werkzeugmaschine geheim halten, so ist eine Werkzeugmaschine zu empfehlen, bei der diese einen Leser, vorzugsweise einen Chipkartenleser aufweist, der zur Aufnahme eines Dechiffriermoduls, vorzugsweise einer Chipkarte vorgesehen ist, welches den Dechiffrierschlüssel aufweist, mithilfe dessen das Fehlansteuerungssicherheits-Modul die verschlüsselten Maschinensteuerparameter entschlüsselt und wobei das Dechiffriermodul so eingerichtet ist, daß nur das Fehlansteuerungssicherheits-Modul den Dechiffrierschlüssel aus dem Modul auslesen kann, was leicht etwa dadurch erreicht werden kann, daß die in dem Modul befindlichen Daten, also auch der Dechiffrierschlüssel selbst wiederum verschlüsselt sind, wobei das Fehlansteuerungssicherheits-Modul über den Schlüssel zur Dechiffrierung der Moduldaten verfügt.

Eine gegen Fehlansteuerung abgesicherte Werkzeugmaschine ist vorteilhafter weise so auggesteltet, daß ein Fehlansteuerungssicherheits-Modul die erfolgreiche Dechiffrierung der Maschinensteuerparameter auch anhand des Auffindens einer Signatur einer zum Ansteuern der Werkzeugmaschine authorisierten Einheit nach der Dechiffrierung feststellt.

Hior zu ist des Verfahren zur Vermeidung fehlerhafter Maschinenansteuerung durch Maschinensteuerparameter einer Werkzeugmaschine nach der vorliegenden Erfindung 50 ausgestaltet, daß die für die Werkzeugmaschine bestimmten Maschinensteuerparameter zuerst mittels eines privaten, dem Absender der Maschinensteuerparameter zugeordneten Dechiffrierschlüssels verschlüsselt und mit einer Absenderkennung dieses Absenders versehen werden und so durch den Absender signiert, erst mithilfe des der Werkzeugmaschine zugeordneten und zum Chiffrieren bekannten Chiffrierschlüssels verschlüsselt werden.

Signaturverfahren sind Verfahren, die der Authentisierung einer Nachricht hinsichtlich ihres Absenders dienen. Asymmetrische Verschlüsselungsverfahren können dann auch als Signaturverfahren eingesetzt werden, wenn die Nachricht sowohl mit dem Dechiffrierschlüssel entschlüsselt werden kann, wenn sie mit dem Chiffrierschlüssel verschlüsselt wurde, als auch mit dem Chiffrierschlüssel entschlüsselt werden kann, wenn sie mit dem Dechiffrierschlüssel verschlüsselt wurde (vgl, hierzu etwa auch die bereits in den Offenbarungsgehalt hier durch Verweis miteinbezogenen Texte, etwa aus Bauer, Friedrich L., Entzifferte Geheimnisse - Methoden und Maximen der Kryptologie, Berlin Heidelberg 1995, S. 153 - 168, dort insbes. S. 155 u. - 156 o. oder auch US 4,405,829). In einem solchen Signaturverfahren mit einem Chiffrier- und einem Dechiffrierschlüssel des Absenders kann dieser eine Nachricht dann leicht überprüfbar signieren, indem der Absender die Nachricht zunächst mit seinem Dechiffrierschlüssel verschlüsselt, dieser Nachricht sodann eine Absenderidentifikation hinzufügt und die so entstandene Gesamtnachricht mit dem zur Zielmaschine gehörigen Chiffrierschlüssel verschlüsselt. Diese kann dann nach Entschlüsselung zunächst die Absenderidentifikation lesen und mittels dieser - etwa aufgrund eines Verzeichnisses, wie einer Liste oder einer Datenbank - feststellen, welcher Chiffrierschlüssel dieser Absenderidentifikation zugeordnet ist. Wenn nun - aufgrund der zu Anfang dieses Abschnitts erläuterten besonderen Zusatzeigenschaft dieses asymmetrischen Verschlüsselungssystems - dieser so aufgefundene Chiffrierschlüssel zur Dechiffrierung der Nachricht geeignet ist, so weiß die Maschine, daß die Nachricht tatsächlich von dem Absender kommt, der der in der Gesamtnachricht verwendeten Identifikation entspricht.

Vorliegend kann ein solches aus dem Stand der Technik bereits bekanntes Signaturverfahren nun zusätzlich dazu eingesetzt werden, auf der Werkzeugmaschine nicht nur zu prüfen, ob die Maschinensteuerparameter tatsächlich für diese Maschine erzeugt wurde, sondern auch dazu, festzustellen, ob das System, welches die Daten erzeugte - also der Absender in der vorstehend verwendeten Terminologie-, etwa anhand einer entsprechenden Liste hierzu auch tatsächlich geeignet und befugt ist. Ist es dies nicht, so verarbeitet die Maschine die entsprechenden Maschinensteuerparameter in dieser Ausführungsform nicht. Eine solche Ausführungsform bietet somit die Möglichkeit, Systeme zur Erzeugung von Maschinensteuerparameter zu zertifizieren und zur Ansteuerung von Werkzeugmaschinen freizuschalten. Auf diese Weise kann verhindert werden, daß etwa solche Systeme, die keine hinreichende Gewähr für die Sicherheit der ofumals hochkomplexen Ansteuerung der Maschine mit ihren Achsen bieten, von der Ansteuerung der Maschinen ausgeschlossen werden.

Dem Betrieb der Werkzeugmaschine dient auch hierbei vorzugsweise ein Datenträger oder elektronisches Trägersignal mit Maschinensteuerparametern zum Einlesen in die Werkzeugmaschine, wobei auf dem Datenträger oder dem elektronischen Trägersignal Maschinensteuerparameter für die Werkzeugmaschine vorliegen, welche zuerst mittels eines privaten, dem Absender der Maschinensteuerparameter zugeordneten Chiffrierschlüssels verschlüsselt und mit einer Absenderkennung dieses Absenders versehen und so signiert erst mithilfe des der Werkzeugmaschine zugeordneten und zum Chiffrieren bekannten Chiffrierschlüssels verschlüsselt sind.

Die Feststellung, ob eine Dechiffrierung erfolgreich war, kann vorzugsweise so erfolgen, daß sie nach der Dechiffrierung anhand des Auffindens einer der Werkzeugmaschine zugeordneten Maschinen-Identifikation erfolgt, wobei das erfindungsgemäße Verfahren zur Vermeidung fehlerhafter Maschinenansteuerung durch Maschinensteuerparameter einer Werkzeugmaschine nach der vorliegenden Erfindung so ausgestaltet ist, daß den Maschinensteuerparametern vor dem Chiffrieren eine der Maschine zugeordnete Maschinen-Identifikation hinzugefügt wird, so daß die Werkzeugmaschine, wenn sie die Maschinensteuerparameter mithilfe ihres zugeordneten privaten Dechiffrierschlüssels wieder entschlüsselt, anhand der Tatsache, daß diese die ihr zugeordnete Maschinen-Identifikation enthalten, feststellen kann, daß es sich um Maschinensteuerdaten zu ihrer Ansteuerung handelt. Der entsprechende Datenträger oder das entsprechende elektronische Trägersignal mit Maschinensteuerparametern zum Einlesen in die Werkzeugmaschine ist dabei so ausgestaltet, daß auf dem Datenträger oder dem elektronischen Trägersignal zumindest eine mitchiffrierte, der Werkzeugmaschine zugeordnete Maschinen-Identifikation vorliegt, so daß die Werkzeugmaschine, wenn sie die Maschinensteuerparameter mithilfe ihres zugeordneten privaten Dechiffrierschlüssels wieder entschlüsselt, anhand der Tatsache, daß diese die ihr zugeordnete Maschinen-Identifikation enthalten, feststellen kann, daß es sich um Maschinensteuerdaten zu ihrer Ansteuerung handelt.

In einer besonders bevorzugten Ausführungsform ist die gegen Fehlansteuerung abgesicherte Werkzeugmaschine dadurch gekennzeichnet, daß das Fehlansteuerungssicherheits-Modul in Abhängigkeit von dem aus einer Mehrzahl von der Werkzeugmaschine zugeordneten Dechiffrierschlüsseln stammenden Dechiffrierschlüssel, unterschiedliche Funktionen der Werkzeugmaschine zur Steuerung durch die Maschinensteuerparameter freigibt.

Heutzutage ist es häufig so, daß von ihren körperlichen Bestandteilen her ein und dieselbe Maschine in sowohl preislich, wie auch funktional unterschiedlichen Varianten am Markt angeboten wird. Die einzelnen Varianten unterscheiden sich dabei häufig nur in verschiedenen Steuer-Modulen, vorzugsweise Software-Modulen oder sogar nur in der unterschiedlichen Freigabe bereits in der Maschine vorhandener verschiedener (Software-)Module durch den Hersteller, je nachdem, welche Optionen der Kunde bereit ist zu bezahlen. Die vorliegende Erfindung eignet sich in geradezu idealer Weise auch diese Funktionalität weitgehend manipulationssicher zu gewährleisten, indem in der Maschine Module, vorzugsweise Software-Module, mit unterschiedlichem Funktionsumfang hinterlegt sind und denen jeweils unterschiedliche Chiffrier- und Dechiffrierschlüssel zugeordnet sind. Dem Kunden, der eine bestimmte Maschinenvariante erwirbt, wird sodann immer der Chiffrierschlüssel - offen oder, wenn gewünscht auch verdeckt codiert (etwa in einer Chipkarte wie o.a) - mitgeliefert, der als inhärente Maschinenadresse des Moduls dient, dessen Leistungsumfang er geordert hat. Die mittels dieses Chiffrierschlüssels verschlüsselten Maschinensteuerparameter können dann nur von diesem Modul dechiffriert und weiterverarbeitet werden. Alle anderen Module vermögen mit den Parametern hingegen nichts anzufangen. Praktisch kann dies etwa so realisiert werden, daß alle Module der Reihe nach versuchen, die Maschinensteuerparameter zu dechiffrieren, bis schließlich eines (oder gar keines) erfolgreich ist, wobei diese Vorgehensweise noch dadurch optimiert werden kann, daß bei allen weiteren Versuchen zur Dechiffrierung immer mit dem Modul begonnen wird, welches zuletzt bei der Dechiffrierung erfolgreich war, so daß hierdurch Verarbeitungszeit eingespart wird und ein neues Modul nur im Falle des Wechsels - etwa bei einem sogenannten Upgrade - des gleichsam so als Adresse einer virtuellen Maschine dienenden Chiffrierschlüssels gesucht wird. In diesem Zusammenhang ist hervorzuheben, daß sich die vorliegende Erfindung für derartige Upgrades besonders eignet, indem in einem solchen Falle dem Kunden, der neue Optionen für seine Maschine erwerben möchte, einfach entsprechend neue Dechiffrier- oder Chiffriermodule, vorzugsweise Chipkarten, zur Verfügung stellt, was eine ausgesprochen manipulationssichere und wirtschaftliche Lösung hierfür darstellt.

Auch dient der Durchführung der vorliegenden Erfindung ein Verfahren zur Erzeugung von Maschinensteuerparametern für eine Werkzeugmaschine, welches dadurch gekennzeichnet ist, daß es einen Datenträger oder ein elektronisches Trägersignal mit Maschinensteuerparametern wie vorstehend dargestellt erzeugt. Selbstverstäzidlich kann dieses Verfahren auch auf einem Computersystem mit mindestens einer Datenverarbeitungseinheit und mindestens einem Speicher realisiert sein, üblicherweise etwa als Computerprogramm, wobei es die entsprechenden Instruktionen aufweist, die zur Durchführung des Verfahrens eingerichtet sind. Ein solches Computerprogramm kann dabei in jeder Form vorliegen, insbesondere aber auch als Computerprogrammprodukt auf einem computerlesbaren Medium, wie etwa Diskette, CD oder DVD, wobei es Computerprogramm-Code-Mittel aufweist, bei dem jeweils nach Laden des Computerprogramms ein Computer durch das Programm zur Durchführung des Verfahrens zur Erzeugung eines Datenträgers oder elektronischen Trägersignals veranlaßt wird. Es kann aber etwa auch als Computerprogrammprodukt, welches ein Computerprogramm auf einem elektronischen Trägersignal aufweist, bei dem jeweils nach Laden des Computerprogramms ein Computer durch das Programm zur Durchführung des Verfahrens veranlaßt wird, vorliegen.

Auf die gleiche Weise, wie vorstehend beschrieben, kann auch das erfindungsgemäße Verfahren zur Vermeidung fehlerhafter Maschinenansteuerung durch Maschinensteuerparameter einer Werkzeugmaschine in allen Ausführungsformen auf einem entsprechend eingerichteten Computersystem betrieben werden. Es kann als Computerprogramm, etwa auf einem Datenträger oder einem elektronischen Trägersignal, etwa zum Download, vorliegen. Ein so eingerichtetes Computersystern zur Erzeugung von Maschinensteuerparametern für eine Werkzeugmaschine kann dabei auch einen Leser, vorzugsweise einen Chipkartenleser aufweisen, der zur Aufnahme eines Chiffriermoduls, vorzugsweise einer Chipkarte vorgesehen ist, welches den Chiffrierschlüssel aufweist, mithilfe dessen das Computersystem die Maschinensteuerparameter verschlüsselt und weiterhin ein Verschlüsselungs-Modul, vorzugsweise ein Verschlüsselungs-Software-Modul, zur Verschlüsselung der Maschinensteuerparameter vorgesehen ist, wobei das Chiffriermodul so eingerichtet ist, daß nur das Verschlüsselungs-Modul den Chiffrierschlüssel aus dem Modul auslesen kann. Ergänzend sei an dieser Stelle angemerkt, daß selbstverständlich auch alle weiteren für die vorliegende Erfindung notwendigen Daten ganz oder teilweise auf einem auslesbaren Modul, etwa dem Dechiffriermodul oder dem Chiffriermodul, vorzugsweise gegen unauthorisiertes Auslesen gesichert, hinterlegt werden können. Alle diese Ausführungsformen, die derartige Module, vorzugsweise Chipkarten verwenden, bieten den Vorteil, daß sie äußerst flexibel mithilfe eines externen Systems konfiguriert werden können, ohne daß es irgendeiner Veränderung der Software in der jeweiligen Werkzeugmaschine oder dem jeweiligen Computersystem zur Erzeugung der Steuerparameter bedarf.

Aus den vorstehend beschriebenen einzelnen unterschiedlichen Elementen der vorliegenden Erfindung kann in Gesamtheit gesehen ein Computersteuerungssystem zur Vermeidung fehlerhafter Maschinenansteuerung durch Maschinensteuerparameter für eine Werkzeugmaschine mit
- einem Computersystem zur Erzeugung von Maschinensteuerparametern für eine Werkzeugmaschine oder
- einem Computerprogramm oder Computerprogrammprodukt hierzu, und
- mindestens einer Werkzeugmaschine
vorgesehen sein. Details eines solchen Systems können im weiteren den Ausführungsbeispielen entnommen werden.

Im folgenden werden nicht einschränkend zu verstehende Ausführungsbeispiele der vorliegenden Erfindung anhand der Zeichnung besprochen. In dieser zeigen:

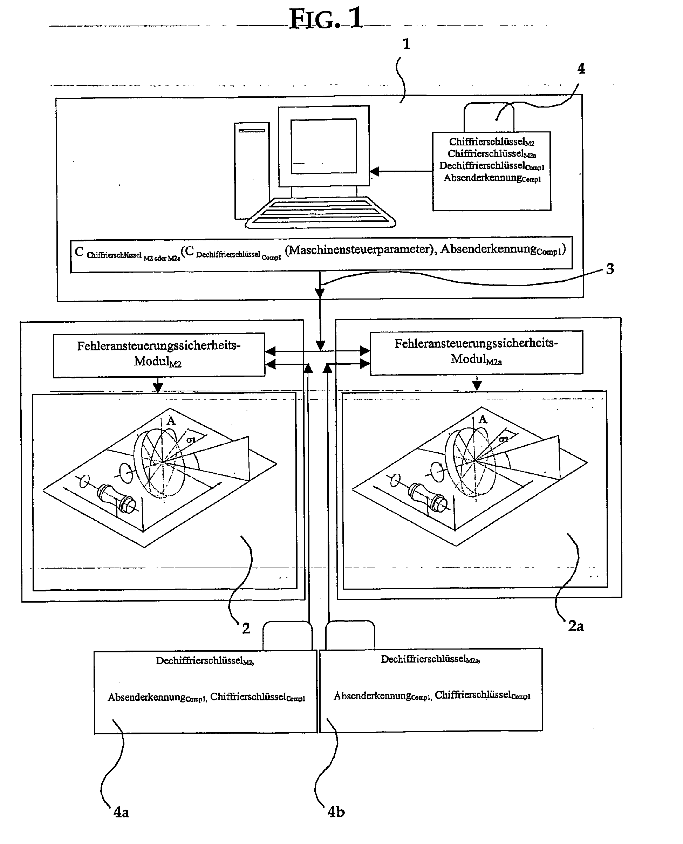

- Fig.1: ein erfindungsgemäßes Computersteuerungssystem zur Vermeidung fehlerhafter Maschinenansteuerung durch Maschinensteuerparameter für eine Werkzeugmaschi- ne.

Fig.1 zeigt ein erfindungsgemäßes Computersteuerungssystem zur Vermeidung fehlerhafter Maschinenansteuerung durch Maschinensteuerparameter für eine Werkzeugmaschine und zwar mit einem erfindungsgemäßen Computersystem 1 zur Erzeugung von Maschinensteuerparametern für eine Werkzeugmaschine 2, 2a mit mindestens einer Datenverarbeitungseinheit und mindestens einem Speicher, wobei die Datenverarbeitungseinheit programmtechnisch so eingerichtet ist, daß sie hier ein elektronisches Trägersignal 3 in einem Datennetzwerk mit Maschinensteuerparametern nach der vorliegenden Erfindung erzeugt und zwei Werkzeugmaschinen 2, 2a.

Vorliegend ist es nun so, daß die erste Maschine 2 (neben anderen Achsen) eine mechanische Schwenkachse σ₁ zur Verschwenkung von Werkstück und Schleifscheibe gegeneinander mittels einer Drehung der Schleifscheibenachse oder ihrer Parallelprojektion in der horizontalen Ebene A aufweist. Die zweite Maschine 2a weist ebenfalls eine solche Schwenkachse σ₂ auf, kann jedoch aufgrund weiterer mechanischer Komponenten im Schwenkbereich dieser Achse nicht den kompletten Schwenkwinkel der Schwenkachse σ₁ abdecken, obschon diese zweite Maschine 2a diese Achse aufgrund der gleichen Basiskonstruktion grundsätzlich die Schwenkachse schon noch über den gesamten Winkelbereich ansteuern kann, was dann allerdings ab einer bestimmten Position zum Bruch führt. Die vorliegende Erfindung bietet nun die Möglichkeit, einen solchen Bruchbetrieb wirkungsvoll zu verhindern. Die Maschine 2 mit dem größeren Schwenkwinkel weist ein Fehlansteuerungssicherheits-Software-Modul_{M2} auf, dem Chiffrierschlüssel_{M2} und Dechiffrierschlüssel_{M2} zugehören. Die zweite Maschine 2a mit kleinerem Schwenkwinkel enthält ein eigenes Fehlansteuerungssicherheits-Software-Modul_{M2a}, mit zugehörigem Chiffrierschlüssel_{M2a} sowie Dechiffrierschlüssel_{M2a}. Das Computersystem 1, welches die Maschinenansterungsparameter erzeugt, weiß nun, welche Maximalwinkel der jeweiligen Maschine 2, 2a für die mechanische Schwenkachse σ₁, σ₂ zur Ansteuerung zur Verfügung steht. Damit nun Maschinensteuerparameter, für die erste Maschine 2 nicht irrtümlich auf der anderen Maschine 2a eingesetzt werden, werden diese über ein Chiffriermodul C, vorzugsweise ein Software-Modul, mittels des jeweiligen Chiffrierschlüssels, nämlich dem Chiffrierschlüssel_{M2} oder aber dem Chiffrierschlüssel_{M2a} als jeweilige inhärente Adresse der zugehörigen Maschine chiffriert, wobei dieser Schlüssel aus einer Chipkarte 4 über einen entsprechenden Leser eingelesen wird. Auf diese Weise wird nun sichergestellt, daß nur die über diesen Schlüssel adressierte Maschine 2, 2a auch tatsächlich durch die Maschinensteuerparameter angesteuert wird und es so nicht zu Bruch kommt, da die jeweilige Maschine 2, 2a auch nur die an sie adressierten Steuerparameter mittels ihres jeweiligen Fehlansteuerungssicherheits-Software-Moduls und des von einer eigenen Chipkarte 4a, 4b über einen Leser eingelesenen Dechiffrierschlüssels lesen kann.

Damit die jeweilige Maschine 2, 2a auch sicherstellen kann, daß die Steuerparameter auch tatsächlich aus einer Quelle stammen, die in der Lage ist, die sichere Ansteuerung der Maschine 2, 2a sicherzustellen, sind hier die Maschinensteuerparameter zudem auch noch mittels eines Signaturverfahrens über eine Absenderkennung signiert. Mithilfe eines Chiffrier-und eines Dechiffrierschlüssels des Absenders, nämlich mit Hilfe der Schlüssel Chiffrierschlüssel_{Comp1} und Dechiffrierschlüssel_{Comp1}, können die Maschinensteuerparameter leicht überprüfbar durch das Computersystem 1 signiert werden, indem es als Absender die Steuerparameter zunächst mit seinem Dechiffrierschlüssel_{Comp1} verschlüsselt, diesen sodann die Absenderidentifikation hinzufügt und die so entstandene Gesamtnachricht mit dem zur Zielmaschine 2, 2a gehörigen Chiffrierschlüssel_{M2} oder Chiffrierschlüssel_{M2a} verschlüsselt. Die jeweilige Maschine 2, 2a kann dann nach Entschlüsselung zunächst die Absenderidentifikation, hier Absenderkennung_{Comp1}, lesen und mittels dieser - hier aufgrund eines Verzeichnisses auf der Chipkarte 4a, 4b - feststellen, welcher Chiffrierschlüssel, hier Chiffrierschlüssel_{Comp1}dieser Absenderidentifikation zugeordnet ist. Wenn nun, aufgrund der im allgemeinen Teil der Beschreibung hier erforderlichen und verwendeten besonderen Zusatzeigenschaft dieses asymmetrischen Verschlüsselungssystems (wie etwa beim bekannten RSA-Verfahren, vgl. auch US 4,405,829) dieser so aufgefundene Chiffrierschlüssel nun zur Dechiffrierung der Nachricht geeignet ist, weil diese mittels des Dechiffrierschlüssels chiffriert wurde, so weiß die Maschine 2, 2a, daß die Nachricht tatsächlich von dem Computersystem 1 als Absender kommt, der der in der Gesamtnachricht verwendeten Identifikation Absenderkennung_{Comp1} entspricht. Aus dem Umstand, daß diese Kennung auf der Chipkarte 4a, 4b verzeichnet ist, kann die Maschine nun auf die Eignung des Absenders zur Ansteuerung vertrauen.

## Patentansprüche

1. Verfahren zur Vermeidung fehlerhafter Maschinenansteuerung durch Maschinensteuerparameter einer Werkzeugmaschine (2, 2a), wobei
die für die Werkzeugmaschine (2, 2a) bestimmten Maschinensteuerparameter
zuerst mittels eines asymmetrischen Chiffrierverfahrens mithilfe eines privaten, dem Absender der Maschinensteuerparameter zugeordneten Dechiffrierschlüssels verschlüsselt
und mit einer Absenderkennung dieses Absenders versehen werden und so durch den Absender signiert, dann mithilfe des der Werkzeugmaschine (2, 2a) zugeordneten und zum Chiffrieren bekannten Chiffrierschlüssels verschlüsselt werden,
so, daß die Werkzeugmaschine (2, 2a)
die Maschinensteuerparameter mithilfe eines ihr ebenfalls zugeordneten, zum Chiffrierschlüssel unterschiedlichen und zum Dechiffrieren vorgesehenen Dechiffrierschlüssels wieder entschlüsseln und
den Absender vermittels der Absenderidentifkation und der Feststellung der Geeignetheit eines der Absenderidentiftkation zugeordneten Chifrierschlüssels zur Dechiffrierung der für die Werkzeugmachine (2, 2a) bestimmten Maschinensteuerparameter authentisieren kann.

2. Verfahren zur Vermeidung fehlerhafter Maschinenansteuerung durch Maschinensteuerparametet einer Werkzeugmaschine (2, 2a) nach Anspruch 1, **dadurch gekennzeichnet, daß** die Werkzeugmaschine (2, 2a) anhand der Absenderidentifikation und der Geeignetheit des der Absenderidentifikation zugeordneten Chifrierschlüssels zur Dechiffrierung der für die Werkzeugmaschine (2, 2a) bestimmten Maschinensteueparameter prüft, ob die Maschinensteueparameter tatsächlich füt diese Maschine erzeugt wunden

3. Verfahren zur Vermeidung fehlerhafter Maschinenansteuerung durch Maschinensteuerparameter einer Werkzeugmaschine (2, 2a) nach Anspruch 1 oder 2, **dadurch gekennzeichnet, daß** die Werkzeugmaschine (2, 2a) anhand der Absenderidentifikation und der Geeignetheit des der Absenderidentifikation zugeordneten Chifrierschlüssels zur Dechiffrierung der für die Welkzeugmaschine (2, 2a) bestimmten Maschinensteuerparametes feststellt, ob das System, welches die Daten erzeugte hierzu auch tatsächlich geeignet und befugt ist.

## Claims

1. Method of avoiding improper machine activation by machine control parameters of a machine tool (2, 2a), wherein
the machine control parameters intended for the machine tool (2, 2a)
are first encrypted by means of an asymmetric encryption method using a private decryption key which is assigned to the sender of the machine control parameters
and are provided with a sender identification of said sender and are signed by the sender in this way, and are then encrypted by means of the encryption key which is assigned to the machine tool (2, 2a) and which is known for the purpose of encryption,
such that the machine tool (2, 2a) can decrypt the machine control parameters using a decryption key which is likewise assigned to said machine tool and which is different from the encryption key and which is provided for the purpose of decryption and
can authenticate the sender using the sender identification and the determination of the suitability of an encryption key assigned to said sender identification for the purpose of decryption of the machine control parameters intended for the machine tool (2, 2a).

2. Method of avoiding improper machine activation by machine control parameters of a machine tool (2, 2a) according to Claim 1, **characterized in that** the machine tool (2, 2a) uses said sender identification and the suitability of said encryption key assigned to the sender identification for the purpose of decryption of the machine control parameters intended for the machine tool (2, 2a) to check whether the machine control parameters have actually been generated for this machine.

3. Method of avoiding improper machine activation by machine control parameters of a machine tool (2, 2a) according to Claim 1 or 2, **characterized in that** the machine tool (2, 2a) uses the sender identification and the suitability of the encryption key assigned to the sender identification for the purpose of decryption of the machine control parameters intended for the machine tool (2, 2a) to check whether the system which generated the data is actually suitable and authorized for this purpose.

## Revendications

1. Procédé pour éviter une erreur de commande d'une machine par des paramètres de commande de machine d'une machine-outil (2, 2a), dans lequel
les paramètres de commande de machine déterminés pour la machine-outil (2, 2a)
sont d'abord codés au moyen d'un procédé de codage asymétrique à l'aide d'une clé décodage privée, associée à l'émetteur des paramètres de commande de machine
et sont pourvus d'une reconnaissance d'émetteur de cet émetteur et sont ainsi signés par l'émetteur, puis sont codés à l'aide de la clé de codage connue pour le codage et associée à la machine-outil (2, 2a),
de sorte que la machine-outil (2, 2a)
puisse à nouveau décoder les paramètres de commande de machine à l'aide d'une clé de décodage également associée à elle, différente de la clé de codage et prévue pour le décodage et
puisse authentifier l'émetteur au moyen de l'identification d'émetteur et de l'établissement du caractère approprié d'une clé de codage associée à l'identification d'émetteur pour le décodage des paramètres de commande de machine déterminés pour la machine-outil (2, 2a).

2. Procédé pour éviter une erreur de commande d'une machine par des paramètres de commande de machine d'une machine-outil (2, 2a) selon la revendication 1, **caractérisé en ce que** la machine-outil (2, 2a) vérifie, à l'aide de l'identification d'émetteur et du caractère approprié de la clé de codage associée à l'identification d'émetteur pour le décodage des paramètres de commande de machine déterminés pour la machine-outil (2, 2a), si les paramètres de commande de machine ont effectivement été produits pour cette machine.

3. Procédé pour éviter une erreur de commande d'une machine par des paramètres de commande de machine d'une machine-outil (2, 2a) selon la revendication 1 ou 2, **caractérisé en ce que** la machine-outil (2, 2a) établit, à l'aide de l'identification d'émetteur et du caractère approprié de la clé de codage associée à l'identification d'émetteur pour le décodage des paramètres de commande de machine déterminés pour la machine-outil (2, 2a), si le système qui a produit les données est aussi effectivement approprié et autorisé pour cela.
